# EUROPÄISCHE PATENTSCHRIFT

(11) **EP 1 342 594 B1**
(45) Veröffentlichungstag und Bekanntmachung des Hinweises auf die Patenterteilung: **07.06.2006**
(21) Anmeldenummer: 03004504.1
(22) Anmeldetag: 28.02.2003
(51) Int. Cl.: B60D 1/173, B60D 1/32

(54) **Gelenk zwischen zwei Teilen eines Gelenkfahrzeuges**
Articulated joint between two parts of an articulated vehicle
Ensemble d'articulation entre deux parties d'un véhicule articulé

(30) Priorität: 02.03.2002 DE 10209354
(43) Veröffentlichungstag der Anmeldung: 10.09.2003
(73) Patentinhaber: HÜBNER GmbH, 34123 Kassel (DE)
(72) Erfinder: Zolotov, Roman, 34128 Kassel (DE)
(74) Vertreter: WALTHER, WALTHER & HINZ Patentanwälte - European Patent Attorneys

(56) Entgegenhaltungen:
- EP-A- 0 298 401
- DE-A- 3 134 301
- DE-A- 4 329 674
- FR-A- 1 397 051
- US-A- 2 112 559
- US-A- 2 603 502
- US-A- 4 313 616
- US-A1- 2001 052 305
- US-B1- 6 283 489

## Beschreibung

Die Erfindung betrifft ein Gelenk zwischen zwei gelenkig miteinander verbundenen Fahrzeugen oder Fahrzeugteilen, z. B. eines Gelenkbusses oder eines Schienenfahrzeuges, mit kreuzweise und drehbar zu den Fahrzeugen angeordneten Gelenkarmen, wobei das Gelenk mindestens ein Dämpfungsglied aufweist.

Gelenke zwischen zwei Fahrzeugen oder Fahrzeugteilen, beispielsweise bei einem Gelenkbus, sind hinreichend bekannt. Hierbei ist ein zentrales Gelenk in Form eines Knickgelenkes vorgesehen, mit einer in der Mittellängsachse des Fahrzeugs angeordneten zentralen Achse, wobei in diese Achse das Fahrzeug bei Kurvenfahrt einknickt. Nachteilig bei den bekannten Knickgelenken ist, dass aufgrund der Erstreckung des Gelenkes zwischen den beiden Fahrzeugen oder Fahrzeugteilen ein Abstand von etwa 1600 mm erforderlich ist. Da der Raum, den das Gelenk zwischen den beiden Fahrzeugen oder Fahrzeugteilen in Anspruch nimmt, vom Grundsatz her ein nur beschränkt nutzbarer Raum ist, besteht ein Interesse daran, diesen Raum und damit den Abstand zwischen den beiden Fahrzeugen oder Fahrzeugteilen zu minimieren, um gegebenenfalls eine weitere Sitzreihe in den Fahrzeugen oder Fahrzeugteilen unterbringen zu können.

Aus der gattungsgemäßen DE 31 34 304 A1 ist ein Gelenk gemäß dem Oberbegriff des Anspruches 1 bekannt, wobei dort eine Dämpfungseinrichtung mit zwei Stoßdämpfern vorgesehen ist, die jedoch zwischen den beiden Fahrzeugteilen verlaufen. Im Einzelnen ist die Anordnung der Stoßdämpfer derart gewählt, dass ein jeder Stoßdämpfer von dem Ende des einen Gelenkarmes zum gegenüberliegenden Fahrzeug oder Fahrzeugteil geführt ist. Die Anordnung der beiden Dämpfer ist hierbei nach Art eines Parallelogrammlenkers gewählt, der eine platzsparende Anordnung ganz offensichtlich nicht darstellt. Das heißt, der Abstand zwischen den beiden Fahrzeugteilen darf ein gewisses Minimum nicht unterschreiten, um genügend Raum für die Stoßdämpfer bereitstellen zu können.

Der Erfindung liegt daher die Aufgabe zugrunde, ein Gelenk gemäß Oberbegriff des Anspruches 1 bereitzustellen, bei dem die Dämpfungseinrichtung in platzsparender Weise an dem Fahrzeug angeordnet werden kann.

Die Aufgabe wird erfindungsgemäß dadurch gelöst, dass der Gelenkarm im Bereich der Anlenkung des Gelenkarmes am Fahrzeug oder Fahrzeugteil einen Nocken aufweist, an dem das Dämpfungsglied angeordnet ist, wobei das Dämpfungsglied parallel zur Querachse des Fahrzeuges oder Fahrzeugteiles verlaufend an diesem angeordnet ist.

Dadurch, dass der Gelenkarm im Bereich der Anlenkung des Gelenkarms am Fahrzeug oder Fahrzeugteil einen Nocken aufweist, an dem das Dämpfungsglied angeordnet ist, wird die Möglichkeit eröffnet, kurze Dämpfungswege bei hoher Dämpfungskraft zu verwirklichen, bei gleichzeitig geringem Platzbedarf für die Anordnung des Dämpfers.

Das heißt, dass durch ein derart ausgebildetes Gelenk der Abstand zwischen den beiden Fahrzeugen oder Fahrzeugteilen mit einer ausreichenden Dämpfung von bislang ca. 1600 mm auf unter 1000 mm verkürzt werden kann. Dies ermöglicht die Anordnung einer weiteren Sitzreihe in einem der Fahrzeuge bzw. Fahrzeugteile. Die Dämpfung des Gelenkes ist erforderlich um sicherzustellen, dass bei Geradeausfahrt der Hinterwagen gegenüber dem Vorderwagen stabil läuft.

Vorteilhaft ist hierbei weiterhin, dass der Balg aufgrund des geringeren Abstandes zwischen den Fahrzeugen um etwa die Hälfte verkürzt werden kann, was preislich insofern insbesondere interessant ist, als der Mittelrahmen als stabilisierendes Element entfallen kann. Aufgrund der geringeren Länge kann auch der Balg, der Teil des Überganges zwischen zwei gelenkig miteinander verbundenen Fahrzeugen ist, kürzer ausgebildet sein. Wegen der geringeren Länge baucht der Balg bei Kurvenfahrt insbesondere auch nach unten weniger aus, so dass ein solches Gelenk sich insbesondere zum Einsatz in Niederflurfahrzeugen eignet.

Weitere vorteilhafte Merkmale sind den Unteransprüchen zu entnehmen.

So ist insbesondere vorgesehen, dass die Gelenkarme beabstandet zur Mittellängsachse des Fahrzeugs an den Fahrzeugen oder Fahrzeugteilen drehbar angeordnet sind, wobei vorteilhaft die Gelenkarme gleich lang sind. Aufgrund der Symmetrie des kreuzartig ausgebildeten Gelenkes wird ein weiterer Vorteil offenbart, der darin besteht, dass nach Durchfahren einer Kurve der Hinterwagen sich aufgrund der Gelenkgeometrie unmittelbar immer fluchtend zum Vorderwagen ausrichtet. Hierbei ist es völlig gleich, ob das Gelenkfahrzeug als Puscher ausgebildet ist, also als ein Fahrzeug, bei dem die hintere Achse angetrieben ist, oder als ein Fahrzeug, bei dem der Vorderwagen angetrieben ist. Dem gleichen Ziel dient die Maßnahme, die Gelenkarme jeweils im gleichen Abstand zur Mittellängsachse an dem Fahrzeug oder Fahrzeugteil anzuordnen.

Besonders platzsparend ist die Konstruktion dann, wenn der Nocken so an dem Gelenkarm angeordnet ist, dass das Dämpfungsglied, das zum Beispiel als Kolben-Zylindereinheit ausgebildet sein kann, parallel zur Querachse des Fahrzeugs oder Fahrzeugteils an diesem angeordnet ist, das heißt, das Dämpfungsglied verläuft parallel zur Querachse des Fahrzeugs.

Bekanntermaßen durchfahren Gelenkfahrzeuge Senken oder überfahren Kuppen. Das heißt, dass die Gelenkverbindung in der Lage sein muss, Nickbewegungen zwischen den Fahrzeugen bzw. Fahrzeugteilen nachgeben zu können. Insofern ist nach einem weiteren Merkmal der Erfindung vorgesehen, dass die drehgelenkige Anbindung der Gelenkarme an zumindest einem Fahrzeug oder Fahrzeugteil derart ist, dass die Fahrzeuge oder Fahrzeugteile relativ zueinander Nickbewegungen ausführen können. Hierzu ist im Einzelnen der Gelenkarm in vertikaler Richtung elastisch verschwenkbar an dem Fahrzeug oder Fahrzeugteil angeordnet, wobei vorzugsweise an dem einen Fahrzeug oder Fahrzeugteil ein Lagertopf vorgesehen ist, in dem ein Gelenkbolzen elastisch nachgiebig eingebettet ist, wobei der Gelenkbolzen an dem Gelenkarm angeordnet ist. Nach einem Merkmal ist hierbei vorgesehen, dass der Lagertopf in Richtung von dem Gelenkarm weg konisch zulaufend ausgebildet ist. Das bedeutet, dass bei Verschwenkung des Gelenkarmes in vertikaler Richtung, wie es auftritt, wenn ein derartiges Gelenkfahrzeug eine Kuppe oder eine Senke durchfährt, dieser Gelenkarm gegen die Kraft des in dem Topf angeordneten elastomeren Materials, z. B. Gummi, bewegt wird. Der maximale Nickwinkei ist hierbei naturgemäß abhängig von der Konizität des Lagertopfes bzw. auch von dem Material des Elastomers in dem lagerktopf.

Zwischen den beiden Fahrzeugen oder Fahrzeugteilen befindet sich eine Übergangseinrichtung umfassend mindestens einen Balg oder einen Doppelbalg mit einer Übergangsbrücke, um Personen ein Überwechseln zwischen den Fahrzeugen zu ermöglichen. Wesentlich ist die Ausgestaltung der Übergangsbrücke insofern, als diese an einem Ende kreisbogenförmig ausgebildet ist, um eine Drehbewegung der Fahrzeuge relativ zueinander zu erlauben.

Anhand der Zeichnungen wird die Erfindung nachstehend beispielhaft näher erläutert:

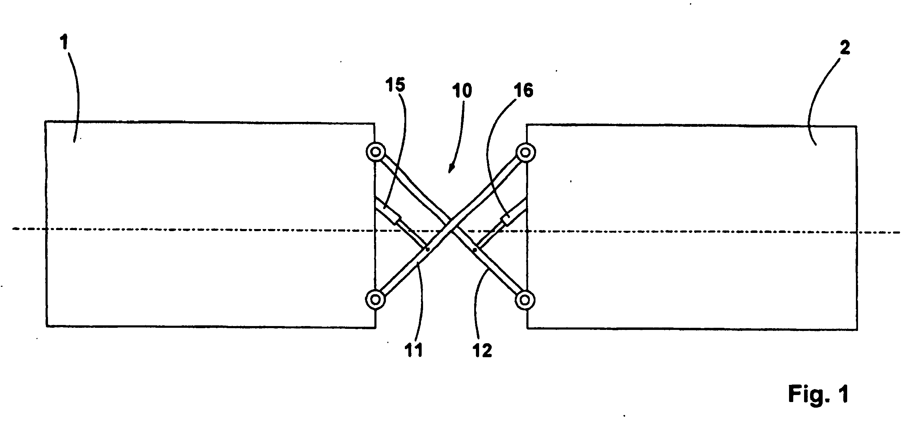

- Fig. 1: zeigt schematisch den Vorderwagen und den Hinterwagen, die durch ein krenzartiges Gelenk miteinander verbunden sind in Geradeausfahrt;
- Fig. 2: zeigt die Darstellung gem. Fig. 1, wobei durch das Fahrzeug, bestehend aus Vorderwagen und Hinterwagen, eine Kurve durchfahren wird;
- Fig. 3: zeigt die Ausbildung des Lagertopfes für die Anordnung der Gelenkarme an den Fahrzeugen;
- Fig. 4: zeigt die erfindungsgemäße Anordnung der Gelenkarme durch die beiden Dämpfungseinrichtungen im Detail.

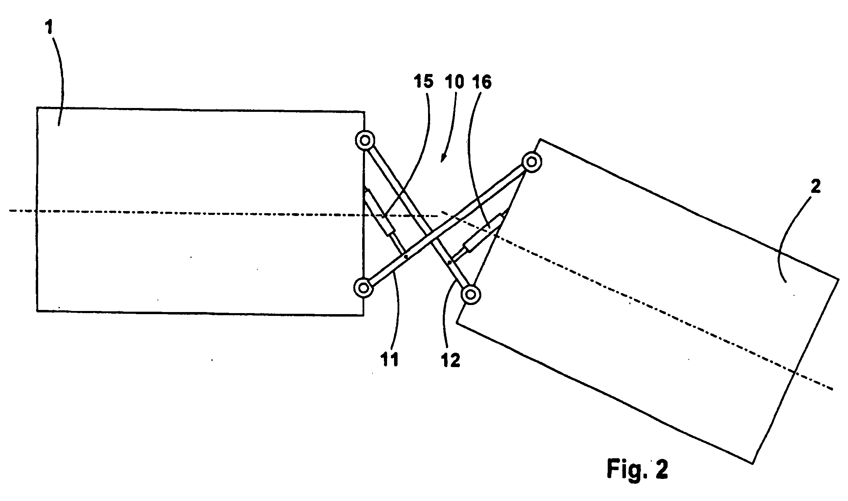

Der mit 1 bezeichnete Vorderwagen ist mit dem Hinterwagen 2 durch das kreuzartige Gelenk 10 verbunden. Dieses Gelenk 10 umfasst zwei Gelenkarme 11 und 12, die jeweils drehgelenkig an dem Vorderwagen und an dem Hinterwagen angeordnet sind. Hierbei sind die Gelenkarme in jeweils gleichem Abstand beabstandet zur Mittellängsachse der Fahrzeuge an den Fahrzeugen oder Fahrzeugteilen angeordnet und sind darüber hinaus gleichlang ausgebildet. Die Stellung der beiden Gelenkarme bei Kurvenfahrt des Fahrzeuges ergibt sich aus Fig. 2; so ist hieraus erkennbar, dass der Schnittpunkt der beiden Gelenkarme entsprechend der zu durchfahrenden Kurve nach außen wandert. Vorteilhaft bei diesem Gelenk ist, dass sich der Hinterwagen nach Durchfahren der Kurve unmittelbar fluchtend zum Vorderwagen selbsttätig ausrichtet.

Jedem Gelenkarm 11, 12 ist jeweils ein Dämpfungsglied 15, 16 zugeordnet, wobei dieses Dämpfungsglied 15, 16 jeweils mit dem einen Gelenkarm und mit dem Fahrzeug bzw. Fahrzeugteil, sprich dem Vorderwagen bzw. Hinterwagen, verbunden ist. Das heißt, dass die Bewegung des Gelenkes gedämpft erfolgt, wobei bei Geradeausfahrt insbesondere auch vorgesehen sein kann, die Dämpfer 15, 16 steif auszugestalten, um den Hinterwagen relativ zum Vorderwagen stabil zu halten.

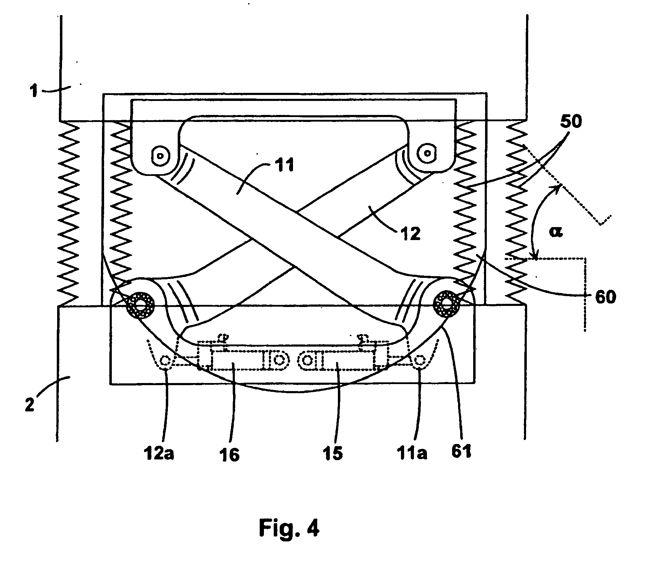

Aus der Darstellung gemäß Fig. 4 ergibt sich im Einzelnen insbesondere die erfindungsgemäße Anordnung der Dämpfungsglieder 15,16 einerseits am Fahrzeug bzw. Fahrzeugteil und am jeweiligen Gelenkarm. Jeder Gelenkarm 11,12 zeigt im Bereich der Anordnung der Gelenkarme am Hinterwagen 2 einen Nocken 11a, 12a. Dieser Nocken 11a, 12a nimmt schwenkbeweglich das Dämpfungsglied 15, 16 auf. Dieses Dämpfungsglied 15, 16 ist am Fahrzeug befestigt.

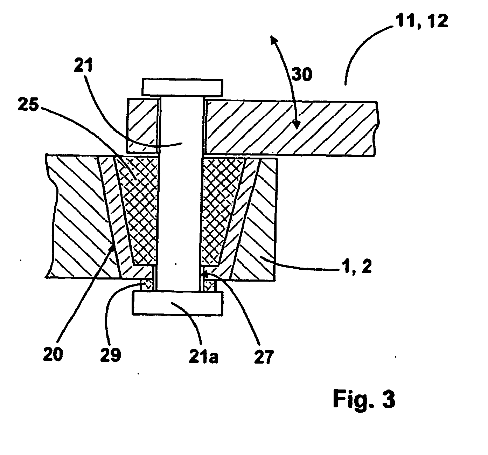

Die gelenkige Anbindung der Arme am Vorder- bzw. am Hinterwagen ergibt sich im Einzelnen aus Fig. 3. So zeigt der Vorder- bzw. Hinterwagen 1, 2 zur Anbringung des Gelenkarmes einen Lagertopf 20, der den Bolzen 21 aufnimmt, wobei der Bolzen im Lagertopf durch ein Elastomermaterial 25 eingebettet ist. Der Lagertopf 20 öffnet sich hierbei in Richtung auf den Gelenkarm 11 konisch auslaufend. Die Fixierung des Bolzens 21 in dem Lagertopf ist hierbei derart, dass der Gelenkarm eine Bewegung in Richtung des Pfeiles 30 ausführen kann, wie sie erforderlich ist, wenn ein derartiges Gelenkfahrzeug Kuppen über bzw. Senken durchfährt. Um eine derartige Bewegung zu ermöglichen, ist der Bolzen entsprechend gelenkig durch den Lagertopf aufgenommen, wobei hierzu im Boden des Lagertopfes eine Bohrung 27 vorgesehen ist, die größer ausgebildet ist als der Durchmesser des Bolzens 21. Auch ist vorteilhaft zwischen dem Bolzenkopf 21 a und dem Boden des Lagertopfes eine elastisch nachgiebige Scheibe 29 angeordnet.

Aus der Fig. 4 ist ebenfalls die Übergangseinrichtung, umfassend den Doppelbalg 50 und die Übergangsbrücke 60, erkennbar. Die Brücke 66 weist auf ihrem dem Hinterwagen 2 zugewandten Ende eine kreisbogenförmige Ausgestaltung 61 auf.

## Patentansprüche

1. Gelenk zwischen zwei gelenkig miteinander verbundenen Fahrzeugen oder Fahrzeugteilen, z. B. eines Gelenkbusses oder eines Schienenfahrzeuges, mit kreuzweise und drehbar zu den Fahrzeugen (1, 2) angeordneten Gelenkarmen (11, 12), wobei das Gelenk mindestens ein Dämpfungsglied (15, 16) aufweist,
**dadurch gekennzeichnet,**
**dass** der Gelenkarm (11, 12) im Bereich der Anbindung des Gelenkarmes am Fahrzeug oder Fahrzeugteil (1, 2) einen Nocken (11a, 12a) aufweist, an dem das Dämpfungsglied (15, 16) angeordnet ist, wobei das Dämpfungsglied (15, 16) parallel zur Querachse des Fahrzeuges oder Fahrzeugteiles (1, 2) verlaufend an diesem angeordnet ist.

2. Gelenk nach Anspruch 1,
**dadurch gekennzeichnet,**
**dass** die Gelenkarme (11, 12) beabstandet zur Mittellängsachse des Fahrzeuges an den Fahrzeugen (1, 2) oder Fahrzeugteilen drehbar angeordnet sind.

3. Gelenk nach Anspruch 1,
**dadurch gekennzeichnet,**
**dass** die Gelenkarme (11, 12) gleich lang sind.

4. Gelenk nach Anspruch 1,
**dadurch gekennzeichnet,**
**dass** die Gelenkarme (11, 12) jeweils im gleichen Abstand zur Mittellängsachse an dem Fahrzeug (1, 2) oder Fahrzeugteil angeordnet sind.

5. Gelenk nach Anspruch 1,
**dadurch gekennzeichnet,**
**dass** das Dämpfungsglied als Kolbenzylindereinheit ausgebildet ist.

6. Gelenk nach Anspruch 1,
**dadurch gekennzeichnet,**
**dass** die drehgelenkige Anbindung der Gelenkarme (11, 12) an zumindest einem Fahrzeug oder Fahrzeugteil (1, 2) derart ist, dass die Fahrzeuge oder Fahrzeugteile (1, 2) relativ zueinander Nickbewegungen ausführen können.

7. Gelenk nach Anspruch 6,
**dadurch gekennzeichnet,**
**dass** der Gelenkarm (11, 12) in vertikaler Richtung elastisch verschwenkbar an dem Fahrzeug oder Fahrzeugteil (1, 2) angeordnet ist.

8. Gelenk nach Anspruch 1,
**dadurch gekennzeichnet,**
**dass** an dem Fahrzeug oder Fahrzeugteil (1, 2) ein Lagertopf (20) vorgesehen ist, in dem ein Gelenkbolzen (21) elastisch nachgiebig eingebettet ist, wobei der Gelenkbolzen (21) an dem Gelenkarm (11, 12) angeordnet ist.

9. Gelenk nach Anspruch 8,
**dadurch gekennzeichnet,**
**dass** der Lagertopf (20) in Richtung von dem Gelenkarm (11, 12) weg konisch zulaufend ausgebildet ist.

## Claims

1. A hinge between two hinge-linked vehicles or vehicle parts, e.g., of an articulated bus or of a rail-bound vehicle, said hinge having arms (11, 12) arranged crosswise so as to be rotatable with respect to the vehicles (1, 2) and comprising at least one damper member (15, 16),
**characterized in**
**that** said hinge arm (11, 12) comprises, in the region where it is linked to the vehicle or vehicle part (1, 2), a boss (11a, 12a) on which there is disposed the damper member (15, 16), said damper member (15, 16) being disposed on the vehicle or vehicle part (1, 2) so as to run parallel to the transverse axis thereof.

2. The hinge as set forth in claim 1,
**characterized in**
**that** the hinge arms (11, 12) are rotatably disposed on the vehicles (1, 2) or vehicle parts at a distance from the longitudinal central axis of the vehicle.

3. The hinge as set forth in claim 1,
**characterized in**
**that** the hinge arms (11, 12) have the same length.

4. The hinge as set forth in claim 1,
**characterized in**
**that** the hinge arms (11, 12) are disposed on the vehicle (1, 2) or vehicle part , each being spaced the same distance apart from the longitudinal central axis.

5. The hinge as set forth in claim 1,
**characterized in**
**that** the damper member is configured to be a piston and cylinder unit.

6. The hinge as set forth in claim 1,
**characterized in**
**that** the rotatable articulated connection of the hinge arms (11, 12) on at least one vehicle or vehicle part (1, 2) is such that the vehicles or vehicle parts (1, 2) are capable of performing pitch movements relative to each other.

7. The hinge as set forth in claim 6,
**characterized in**
**that** the hinge arm (11, 12) is disposed on the vehicle or vehicle part (1, 2) so as to be elastically pivotal in the vertical direction.

8. The hinge as set forth in claim 1,
**characterized in**
**that** a bearing cup (20) in which a hinge bolt (21) is elastically and resiliently embedded is provided on the vehicle or vehicle part (1, 2), with the hinge bolt (21) being disposed on the hinge arm (11, 12).

9. The hinge as set forth in claim 8,
**characterized in**
**that** the bearing cup (20) is configured so as to taper away from the hinge arm (11, 12).

## Revendications

1. Articulation entre deux véhicules ou parties de véhicule articulées, par exemple d'un bus articulé ou d'un véhicule ferroviaire, du type comportant des bras (11, 12) disposés en croix et mobiles en rotation par rapport aux véhicules (1, 2), cette articulation comportant au moins un organe amortisseur (15, 16),
**caractérisée en ce**
**que** le bras (11, 12) de l'articulation comporte, à la hauteur de l'endroit où il est articulé sur le véhicule ou sur la partie de véhicule (1, 2), un bossage (11a, 12a) sur lequel est disposé l'organe amortisseur (15, 16), ledit organe amortisseur (15, 16) étant disposé sur le véhicule ou sur la partie de véhicule (1, 2) de manière à s'étendre parallèlement à l'axe transversal de celui-ci ou de celle-ci.

2. Articulation selon la revendication 1,
**caractérisée en ce**
**que** les bras (11, 12) de l'articulation sont disposés mobiles en rotation sur les véhicules (1, 2) ou parties de véhicule, à distance de l'axe central longitudinal du véhicule.

3. Articulation selon la revendication 1,
**caractérisée en ce**
**que** les bras (11, 12) de l'articulation sont de même longueur.

4. Articulation selon la revendication 1,
**caractérisée en ce**
**que** les bras (11, 12) de l'articulation sont disposés sur le véhicule (1, 2) ou la partie de véhicule, à égale distance de l'axe central longitudinal.

5. Articulation selon la revendication 1,
**caractérisée en ce**
**que** l'organe amortisseur est conformé en forme d'ensemble cylindre-piston.

6. Articulation selon la revendication 1,
**caractérisée en ce**
**que** la liaison articulée pivotante des bras (11, 12) de l'articulation sur au moins un véhicule ou partie de véhicule (1, 2) est telle que les véhicules ou parties de véhicule (1, 2) sont en mesure d'exécuter des mouvements de tangage l'un par rapport à l'autre.

7. Articulation selon la revendication 6,
**caractérisée en ce**
**que** le bras (11, 12) de l'articulation est disposé mobile en pivotement élastique suivant la direction verticale sur le véhicule ou la partie de véhicule (1, 2).

8. Articulation selon la revendication 1,
**caractérisée en ce**
**qu'**une coupelle de palier (20) dans laquelle est noyé de manière souple et élastique un tourillon (21) est prévue sur le véhicule ou la partie de véhicule (1, 2), ledit tourillon (21) étant disposé sur le bras (11, 12) de l'articulation.

9. Articulation selon la revendication 8,
**caractérisée en ce**
**que** la coupelle de palier (20) s'amincit en cône en éloignement du bras (11, 12) de l'articulation.
